## Europäisches Patentamt
## European Patent Office
## Office européen des brevets

(11) Publication number: **0 248 514**
**B1**

(12) **EUROPEAN PATENT SPECIFICATION**

(45) Date of publication of patent specification: **01.08.90**

(51) Int. Cl.⁵: **G 01 F 11/08**

(21) Application number: **87303044.9**

(22) Date of filing: **08.04.87**

(54) **System and method for dispensing metered quantities of a fluid.**

(30) Priority: **02.06.86 US 869680**

(43) Date of publication of application:
**09.12.87 Bulletin 87/50**

(45) Publication of the grant of the patent:
**01.08.90 Bulletin 90/31**

(84) Designated Contracting States:
**BE CH DE ES FR GB IT LI NL SE**

(56) References cited:
**FR-A-2 199 747**

(73) Proprietor: **TECHNICON INSTRUMENTS CORPORATION(a Delaware corporation)**
**511 Benedict Avenue**
**Tarrytown, New York 10591-6097 (US)**

(72) Inventor: **Uffenheimer Kenneth F.**
**40 Kings Court**
**Chappaqua New York 10514 (US)**
Inventor: **Negersmith, Kent M.**
**R.F.D. No. 2 Pudding Street**
**Carmel New York 10512 (US)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

EP 0 248 514 B1

## Description

The present invention relates to a fluid delivery method and system for dispensing precisely metered quantities of a fluid.

In the delivery and dispensing of precisely metered quantities of fluids, such as reagents for chemical reactions, fluids for intrumentation devices, carrier fluids and the like, it is frequently necessary to use a dispensing nozzle, which may be a component of a probe. The degree of dispensing accuracy obtainable, for example an accuracy of within a single droplet of the fluid, not only depends upon the fluid advancing or pumping action of the fluid delivery system, but also upon the tip geometry and material of the dispensing nozzle or probe, the surface tension between the fluid and the material of the dispensing nozzle, the viscosity of the fluid, the flow velocity of the fluid and upon occasion, the type of reagents from which the fluid is constituted.

Although numerous fluid delivery methods and systems are currently known for dispensing of precisely metered quantities of various types of fluids, none of these is entirely satisfactory in providing the desired precision or dosing accuracy in certain dispensing operations, for example the dispensing of reagents employed in chemical sampling or reactions, or instrumentation fluids, which must be dispensed and/or added to other ingredients extremely accurately.

A system for dispensing quantities of liquid is known from FR—A—2 199 747. However this system does not include air bubble and a diaphragm pump and does not provide any accuracy in dispensing said quantities.

Fritsch U.S. Patent 4,430,048 discloses a diaphragm pump in which a flexible diaphragm separates the pump interior into a fluid delivery chamber and a working chamber, and wherein predetermined quantities of a fluid are aspirated into and discharged from the delivery chamber in response to alternating pressures being imparted to the working chamber. The alternating or reversing changes in pressure acting on the working chamber will enable the fluid to be dispensed from the delivery chamber, in response to the displacement of the diaphragm, through a suitable outlet having a non-return valve therein. Although the diaphragm pump and the fluid delivery system which is provided thereby, as described in the Fritsch publication, facilitate the dispensing or dosing of substantially uniform quantities of a fluid, the system described therein is not adapted to allow for extremely precise metering of fluids.

Hertz U.S. Patent 3,767,326 discloses a control system for regulating the volume of a fluid to be dispensed through the reciprocatory action of a diaphragm pump. However, this known system is designed primarily to facilitate the varying of a quantity of fluid being dispensed therefrom during each cycle of operation, in response to the operation of a bypass valve which is actuated by a control circuit. Surre U.S. Patent 2,662,478 discloses a diaphragm pump and compressor arrangement, through which metered quantities of a fluid may be aspirated and then dispensed responsive to the reciprocating action of a diaphragm in a pump subjected to alternating pressure and vacuum being applied to the working chamber of the diaphragm pump. Schmechtig U.S. Patent 4,269,906 describes a pump device in which pulsating pressures in the form of pressure waves are applied to a membrane, causing the membrane to be displaced from the outlet of a conduit and to facilitate the filling of a pump chamber with a certain quantity of fluid, the fluid then being dispensed from the device by a reversal of pressure. In all these patents, the systems described do not allow for really precise metering.

Other diaphragm pumps and systems for dispensing predetermined quantities of fluids and the like are, respectively, disclosed in Kiffer, et al. U.S. Patent 2,871,789; Haper U.S. Patent 2,308,974; Telford, et al. U.S. Patent 3,269,318; Kitsnik U.S. Patent 4,439,112; Finger U.S. Patent 3,692,433; Di Vette U.S. Patent 2,954,738; Bruggeman U.S. Patent 3,930,756; Ruth U.S. Patent 3,318,324; and Beer U.S. Patent 3,556,684. However, none of these provide the desired or necessary degree of accuracy in dispensing dosages of fluids of the type considered herein.

We have now found a way of very accurate control of fluid metering, in particular of fluid discharge from a nozzle, whereby better and more accurate metering of a fluid can be achieved. This is especially advantageous where, for example, the fluid is one which is employed in delicate chemical reactions, e.g. analyses, or as an instrumentation fluid or carrier fluid, demanding precision to within a droplet of the fluid.

In accordance with one aspect of the invention, there is provided a fluid delivery system for dispensing precisely metered quantities of a fluid comprising fluid supply means; pump means; a conduit interconnecting said fluid supply means and pump means; a first valve in said conduit positioned intermediate said fluid supply means and pump means; a nozzle for discharging said fluid from said system; a further conduit connecting said nozzle with said pump means and with said conduit; a second valve in said further conduit; means for selectively applying a vaccumm or a superatmospheric pressure to said pump means; and control means operatively interconnecting said first and second valves and said selective pressure applying means for aspirating predetermined quantities of fluid from said fluid supply means through said conduit to said pump means and thereafter conveying said quantities of fluid from said pump means to said nozzle, the system being so arranged as to cause formation of a fluid flow-occluding air bubble in said nozzle upon termination of discharge of fluid from said nozzle so as to inhibit discharge of residual droplets of said fluid from said nozzle.

The invention also includes a method of dispensing precisely metered quantites of a fluid, which comprises pumping quantities of a fluid from a fluid supply through a conduit towards a discharge nozzle; effecting said pumping by selectively applying a vacuum or a superatmospheric pressure to a fluid pump and controlling the flow of said fluid by operatively interconnecting a first and second valve and said selective pressure application for aspirating predetermined quantities of fluid from said fluid supply to a pumping arrangement, and thereafter conveying said fluid quantities from said pumping arrangement to said nozzle and causing the formation of a fluid flow-occluding air bubble in said nozzle upon termination of discharge of fluid from said nozzle to inhibit discharge of residual droplets of said fluid.

Preferably, the invention utilises a diaphragm pump having an internal delivery chamber for the fluid and a working chamber separated therefrom by means of a flexible diaphragm. The working chamber is subjected alternately to a vacuum and to a pressure so as to intermittently aspirate a predetermined quantity of fluid from the fluid supply, with the aspirated fluid quantity being commensurate with the internal volume of the diaphragm pump based on the displacement of the diaphragm responsive to a vacuum applied to the working chamber, and with the fluid aspirated into the interior of the diaphragm pump being expelled therefrom through lifting the vacuum and applying superatmospheric pressure to the working chamber which is higher than the pressure in the pump delivery chamber so as to cause the fluid expelled from the pump to be conducted to and dispensed from a discharge nozzle of the system.

In response to the operation of a suitable control arrangement, during the aspirating cycle of the diaphragm pump when the fluid is withdrawn from the supply, one of the valves, which is interposed in a conduit section intermediate the diaphragm pump and the discharge nozzle, is maintained in a closed position, whereas the other valve which is interposed in the conduit section between the supply source for the fluid and the diaphragm pump, is maintained in an open position so as to enable the fluid to be aspirated into the delivery chamber of the diaphragm pump. Concurrently, the working chamber of the pump is subjected to vacuum, thereby allowing the fluid to fill the pump interior. Upon the working chamber of the diaphragm pump then being subjected to superatmospheric pressure, responsive to the actuation of a suitable valve device, such as a three-way valve selectively connectible to a source of vacuum and a source of a pressurized medium, such as air or a hydraulic fluid, the valve which is interposed in the conduit section between the supply source for the fluid and the diaphragm pump is set into a closed position, whereas the valve which is interposed in the conduit section between the diaphragm pump and the discharge nozzle is maintained in an open position so as to allow for a quantity of fluid corresponding to the displacement volume of the diaphragm pump to be ejected from the nozzle.

Through suitable correlation of parameters among the tip geometry and material of the fluid discharge nozzle, volume of fluid pumped, viscosity of fluid being pumped and its flow velocity, and the surface tension present between fluid and conduit wall, an air bubble is formed in the discharge end of the nozzle at the termination of the fluid displacement stroke of the diaphragm pump thereby occluding any droplets of fluid to be dispensed from the nozzle, while concurrently providing a visual indication of the proper pumping action of the fluid dispensing system.

The invention thus provides a system for dispensing precisely metered quantities or dosages of fluid, which preferably employs a diaphragm pump, and which will enable the formation of an occluding air bubble at the fluid discharging tip of a dispensing nozzle as a visual indication of the accuracy of the system in the dispensing of the accurately dosed quantity of fluid. In a preferred embodiment, the invention uses a novel diaphragm pump and a valving arrangement through which the occluding air bubble is formed at the discharge end or tip of a nozzle on the conduit. This bubble inhibits egress of any residual droplets of fluid from the discharge nozzle, and also serves both as a visual monitor and as a precision enhancer in preventing a variable volume droplet of the fluid from remaining on the tip of a probe formed by the nozzle at termination of the fluid dispensing operation of the system during each pumping cycle.

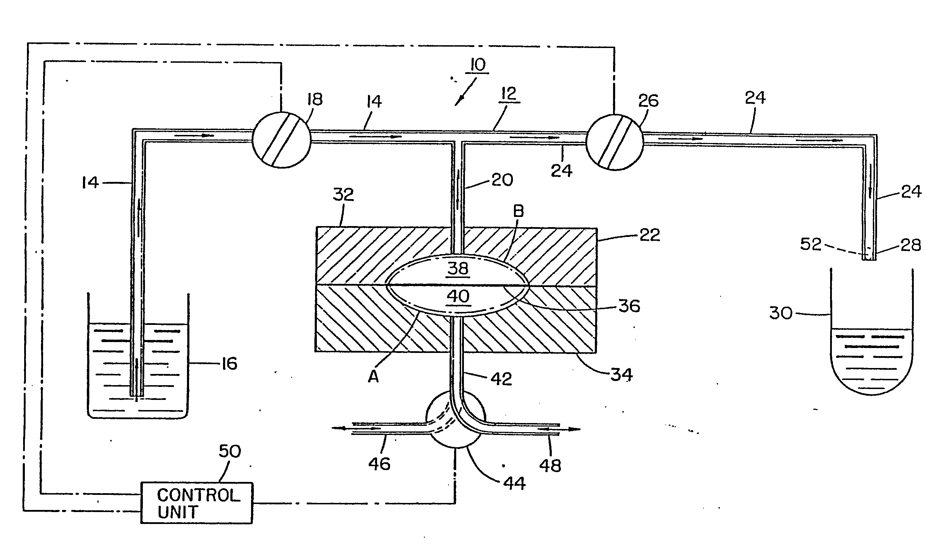

In order that the invention may be more fully understood, an embodiment thereof will now be described, by way of example only, with reference to the accompanying drawing which schematically illustrates one example of a system of the invention.

Referring in detail to the drawing, there is schematically illustrated a system 10 for the dispensing of precisely metered quantities or dosages of a fluid.

The system 10 includes a flow conduit 12 which consists of a first conduit section 14 having a fluid inlet end thereof communicating with a supply receptacle or container 16 for a fluid which is to be dispensed in measured doses. The fluid may be a liquid which is employed in chemical reactions, an instrumentation fluid, a carrier fluid, or any liquid which must be dispensed in extremely accurately dosed or calibrated quantities. Although the receptacle 16 is illustrated as being an open container, it may be readily apparent to one skilled in the art that the receptacle 16 may be of a closed or sealed construction to avoid contamination of the fluid contents by external sources.

A valve 18, which preferably is a non-return valve, is interposed in the conduit section 14 and is arranged ahead or upstream of an interconnection of the conduit section 14 with a conduit 20 which communicates with a diaphragm pump 22. Additionally, the conduit section 14 and conduit 20 communicate at their juncture with a further conduit section 24 of conduit 12 in which there is interposed a second valve 26, preferably also a non-return valve. At its discharge end the conduit section 24 is provided with a suitable discharge nozzle 28 or tip section through which the fluid may be dispensed in accurately metered doses into a suitable receptacle or reaction chamber 30, herein diagrammatically illustrated as an open beaker.

The diaphragm pump 22, which essentially comprises assembled and fastened pump body portions 32 and 34, having a flexible diaphragm 36 sealingly clamped therebetween, and with a first concavely-shaped cavity constituting a fluid delivery chamber 38 being formed in the pump body portion 32, and a second concavely-shaped cavity constituting a working chamber 40 formed in the pump body portion 34, which are separated by the diaphragm 36. The delivery chamber 38 is in open communication with the conduit 20, and resultingly with conduit sections 14 and 24 of conduit 12; whereas the working chamber 40 of the pump 22 is in open communication with a conduit 42 having a suitable three-way valve 44 interposed therein which is adapted to be selectively connected with a source of vacuum or subatmospheric pressure (not shown) through conduit 46, or a supply of a pressurized medium, such as compressed air (not shown) through a conduit 48. The interrelated functioning of the valves 18, 26 and 44 for the operation of the fluid dispensing system 10 may be implemented by means of a suitable control unit 50, which may be a mechanical, electromechanical, electrical or electronically programmable control device in which the operating cycle of the fluid dispensing system may be programmed pursuant to pregiven parameters and requisite operating conditions.

The operation of the fluid dispensing system 10 is essentially as set forth hereinbelow:

With the conduit section 14 and the conduit section 24 having been initially filled with fluid from the receptacle 16, and with conduit 20 and pump delivery chamber 38 also filled with fluid so as to completely expel of any air contained in the fluid dispensing system 10 prior to the accurately dosed discharge of fluid from the dispensing orifice or nozzle 28, the valve 44 is actuated by the control unit 50 so as to relive any pressure in conduit 48. Concurrently, subatmospheric pressure or vacuum is applied to conduit 46 causing the flexible diaphragm 36 to be pulled into surface contact with the concave bottom surface A of the working chamber 40. The control unit 50 is then activated so as to actuate the valve 18 into an open position while causing closing of the valve 26. This will cause fluid to be aspirated from the receptacle 16 and to flow through conduit sections 14 and valve 18 through conduit 20 and thereby fill the entire interior volume of the diaphragm pump 22 defined by the combined delivery chamber 38 and the working chamber 40. Upon the interior volume of the diaphragm pump 22 having been filled with fluid, the control unit 50 closes the valve 18 and opens valve 26, and in lieu of vacuum through conduit 46, a pressurized medium is applied through conduit 48 and conduit 42 to the bottom A of the working chamber 40 and diaphragm 36, displacing the diaphragm 36 into an upward position against the concave bottom surface B of the cavity of the delivery chamber 38. This will cause a volume of fluid commensurate with the volume of combined chambers 38 and 40 to be forced upwardly through the conduit 20 and into conduit section 24 in the direction of the arrows defining the flow of the fluid within the system and to be ejected through the dispensing tip or nozzle 28 into the reaction chamber or beaker 30. The control unit 50 then closes the valve 26, whereupon the termination of the motion of the fluid, in essence, the completion of the dispensing stroke and the inertia of the fluid itself, causes the formation of a fluid flow-occluding air bubble 52 within the nozzle or tip 28, thereby inhibiting the egress of any residual droplets of fluid from the conduit section 25 into the receptacle or reaction chamber 30. The function of the occluding air bubble 52 as a visual monitor and a dispensing precision enhancer in preventing any variable volume droplet of fluid from remaining on the probe tip or discharge nozzle 28 upon completion of each sequence in the dispensing operation, will prevent any deviations in the volume or doses of the dispensed fluid. Furthermore, prevented is the formation of any droplet which, in the absence of the occluding air bubble 52, could conceivably be expelled during movement of the nozzle when employed as a probe, or could partially or fully evaporate so as to generate additional dispensing errors by the fluid delivery system.

Thereafter, the entire fluid dispensing sequence is repeated for the number of required accurately dosed quantities of the fluid which must be dispensed from the system.

Generally, inasmuch as the formation of the fluid flow-occluding air bubble 52 and the resultant degree of precision in the dispensing of the quantities or doses of fluid from the system depends upon interrelated parameters of the tip geometry and material of the nozzle 28, the pump volume, viscosity, flow velocity and type of fluid, pursuant to one specific example of the fluid dispensing system 10, in which the amount of pumped fluid for each operating cycle would be within the range of about 0.10 ml and 10.0 ml, preferably 0.10 ml to 1.0 ml, but is not limited thereto, and with a standard droplet being generally about .05 ml, this droplet would represent an appreciable error in the quantity of dispensed fluid.

Furthermore, of significance is the surface tension of the fluid relative to the internal flow diameter of the nozzle, for example 0.25 to 2.0 mm (.010 to .080 in), with the tip or nozzle 28 being preferably constituted of either plastic or stainless steel, and the fluid having a viscosity within the range of about 0.0005 to 0.005 Pa s (0.5 to 5 centipoises), but not limited thereto, and a flow rate of from about .05 ml/sec. to about 10 ml/sec., but not limited thereto.

Pursuant to a modification of the inventive system, instead of the arrangement of valves 18 and 26 in the respective conduit sections 14 and 24, it is possible to contemplate the utilization of a single three-way valve in the T-connection formed by the juncture of conduit sections 14, 24 and conduit 20, and which is operated by the control unit 50.

It is also possible to contemplate the ganging or grouping of a plurality of pumps of varying configurations, employing common components such as pump bodies, diaphragms, valves, conduits and fluids to provide a compound fluid delivery system on an extremely cost-effective basis.

While there has been shown and described what is considered to be a preferred embodiment of the invention it will of course be understood that various modifications and changes in form or detail could readily be made without departing from the scope of the invention.

**Claims**

1. A fluid delivery system (10) for dispensing precisely metered quantities of a fluid, comprising fluid supply means (16); pump means (22); a conduit (14) interconnecting said fluid supply means (16) and pump means (22); a first valve (18) in said conduit positioned intermediate said fluid supply means (16) and pump means (22); a nozzle (28) for discharging said fluid from said system; a further conduit (24) connecting said nozzle (28) with said pump means (22) and with said conduit (14); a second valve (26) in said further conduit (24); means (44) for selectively applying a vacuum and a superatmospheric pressure to said pump means (22); and a control means (50) operatively interconnecting said first and second valves (18, 26) and said selective pressure applying means (44) for aspirating predetermined quantities of fluid from said fluid supply means (16) through said conduit (14) to said pump means (22) and thereafter conveying said quantities of fluid from said pump means (22) to said nozzle (28), the system being so arranged as to cause formation of a fluid flow-occluding air bubble (52) in said nozzle (28) upon termination of discharge of fluid from said nozzle (28) so as to inhibit discharge of residual droplets of said fluid from said nozzle (28).

2. A system according to claim 1, wherein said pump means (22) comprises a diaphragm pump (22) having a flexible diaphragm (36) separating the interior of said pump (22) into a fluid delivery chamber (38) communicating with said further conduit (24) intermediate said first and second valves (18, 26), and into a working chamber (40) communicating with said selective pressure applying means (44).

3. A system according to claim 2, wherein said diaphragm pump (22) aspirates said fluid from said fluid supply means (16) and conducts a quantity of said fluid to said nozzle (28) commensurate with the combined volume of said delivery and working chambers (38, 40).

4. A system according to claim 1, 2 or 3, wherein said first and second valves (18, 26) each comprise a non-return valve, or said first and second valves (18, 26) comprise a single three-way valve (44) at the juncture of said conduits.

5. A system as claimed in claim 2 or 3, wherein said selective pressure applying means (44) comprises a three-way valve (44) for selectively connecting the working chamber (40) of said diaphragm pump (22) to a source of vacuum or to a source of a pressurized medium, the pressurized medium preferably comprising air or a hydraulic fluid.

6. A system according to claim 2, 3 or 5, wherein said control means maintains said first valve (18) in an open fluid flow condition and said second valve (26) in a flow blocking condition when said working chamber (40) is subjected to a vacuum by said selective pressure applying means (44) for aspirating said quantity of fluid from said fluid supply means into said diaphragm pump (22), and said control means (50) maintains said first valve (18) in a flow blocking condition and said second valve (26) in an open fluid flow condition when said working chamber (40) is subjected to superatmospheric pressure by said selective pressure applying means (44) to eject a predetermined quantity of fluid from said discharge nozzle (28) and to cause the formation of said flow-occluding air bubble (52) in said nozzle (28).

7. A method of dispensing precisely metered quantities of a fluid, which comprises pumping quantities of a fluid from a fluid supply (16) through a conduit (12) towards a discharge nozzle (28); effecting said pumping by selectively applying a vacuum or a superatmospheric pressure to a fluid pump (22) and controlling the flow of said fluid by operatively interconnecting a first (18) and second valve (26) and said selective pressure application for aspirating predetermined quantities of fluid from said fluid supply to a pumping arrangement, and thereafter conveying said fluid quantities from said pumping arrangement to said nozzle (28) and causing the formation of a fluid flow-occluding air bubble (52) in said nozzle (28) upon termination of discharge of fluid from said nozzle (28) to inhibit discharge of residual droplets of said fluid.

8. A method according to claim 7, wherein said fluid pumping arrangement comprises a diaphragm pump (22) having a flexible diaphragm (36), said diaphragm separating said pump into a fluid delivery chamber (38) communicating with said conduit intermediate said first and second valves (18, 26), and into a working chamber (40) responsive to the application of said selective pressure, said diaphragm pump (22) aspirating said fluid from said fluid supply and conducting a quantity of said fluid to said nozzle (28) commensurate with the combined volume of said delivery and working chambers (38, 40) said selective pressure being preferably applied to said working chamber (40) through a three-way valve (44) connected selectively to a source of vacuum or to a source of a pressurized medium, the pressurized medium preferably comprising compressed air or a hydraulic fluid.

9. A method as claimed in claim 8, comprising maintaining said first valve (18) in an open fluid flow condition and said second valve (26) in a fluid flow blocking condition when said working chamber (40) is subjected to a vacuum by said three-way valve (44) for aspirating said quantity of fluid from said fluid supply (16) into said diaphragm pump (22).

10. A method according to claim 8 or 9, comprising maintaining said first valve (18) in a fluid flow blocking condition and said second valve (16) in an open fluid flow condition when said working chamber (40) is subjected to superatmospheric pressure by said three-way valve (44) to eject a predetermined quantity of fluid from said nozzle and to cause the formation of said flow-occluding air bubble in said nozzle (28).

**Patentansprüche**

1. Fluidabgabesystem (10) zur Abgabe genau abgemessener Mengen eines Fluids, enthaltend eine Fluidversorgungsvorrichtung (16); eine Pumpvorrichtung (22); eine Leitung (14), die die Fluidversorgungsvorrichtung (16) und die Pumpvorrichtung (22) miteinander verbindet; ein erstes Absperrorgan (18), das in der Leitung zwischen der Fluidversorgungsvorrichtung (16) und der Pumpvorrichtung (22) angeordnet ist; ein Mundstück (28) zur Ausgabe des Fluids aus dem System; eine weitere Leitung (24), die das Mundstück (28) mit der Pumpvorrichtung (22) und der Leitung (14) verbindet; ein zweites Absperrorgan (26) in der weiteren Leitung (24); eine Vorrichtung (44) zum wahlweisen Anlegen eines Vakuums oder eines überatmosphärischen Drucks an die Pumpvorrichtung (22); und eine Steuereinrichtung (50) zum betriebsmäßigen Durchverbinden des ersten und des zweiten Absperrorgans (18, 26) und der wahlweise druckanlegenden Vorrichtung (44) zwecks Ansaugung vorbestimmter Fluidmengen aus der Fluidversorgungsvorrichtung (16) über die Leitung (14) zu der Pumpvorrichtung (22) und danach zwecks Beförderung der Fluidmengen von der Pumpvorrichtung (22) zu dem Mundstück (28), wobei das System so ausgestaltet ist, daß die Bildung einer fluidstromabschließenden Luftbase (52) in dem Munstück (28) bei Beendigung der Ausgabe von Fluid aus dem Mundstück (28) veranlaßt wird, so daß die Ausgabe restlicher Tröfchen von Fluid aus dem Mundstück (28) unterbunden ist.

2. System nach Anspruch 1, bei dem die Pumpvorrichtung (22) eine Membranpumpe (22) mit einer flexiblen Membran (36) enthält, die das Innere der Pumpe (22) in eine Fluidabgabekammer (38), welche mit der weiteren Leitung (24) zwischen dem ersten und zweiten Absperrorgan (18, 26) in Verbindung steht, und in eine Arbeitskammer (40), die mit der wahlweise druckanlegenden Vorrichtung (44) in Verbindung steht, unterteilt.

3. System nach Anspruch 2, bei dem die Membranpumpe (22) das Fluid aus der Fluidversorgungsvorrichtung (16) ansaugt und dem Mundstück (28) eine Menge des Fluids zuleitet, die mit dem vereinten Volumen der Abgabe- und Arbeitskammer (38, 40) in Einklang steht.

4. System nach Anspruch 1, 2 oder 3, bei dem das erste und zweite Absperrorgan (18, 26) jeweils ein Rückschlagventil enthalten oder das erste und zweite Absperrorgan (18, 26) bei der Verbindungsstelle der Leitungen ein einziges Dreiwegventil (44) enthalten.

5. System wie beansprucht in Anspruch 2 oder 3, bei dem die wahlweise druckanlegende Vorrichtung (44) ein Dreiwegventil (44) zum wahlweisen Verbinden der Arbeitskammer (40) der Membranpumpe (22) mit einer Vakuumquelle oder mit einer Quelle eines Druckmittels enthält, wobei dieses Druckmittel vorzugsweise Luft oder ein Hydraulikfluid enthält.

6. System nach Anspruch 2, 3 oder 5, bei dem die Steuereinrichtung das erste Absperrorgan (18) in einem Fluidstrom-Durchlaßzustand und das zweite Absperrorgan (26) in einem Fluidstrom-Sperrzustand hält, wenn die Arbeitskammer (40) mittels der wahlweise druckanlegenden Vorrichtung (44) einem Vakuum ausgesetzt ist, zum Ansaugen der Menge des Fluids von der Fluidversorgungsvorrichtung in die Membranpumpe (22), und bei dem die Steuereinrichtung (50) das erste Absperrorgan (18) in einem Fluidstrom-Sperrzustand und das zweite Absperrorgan (26) in einem Fluidstrom-Durchlaßzustand hält, wenn die Arbeitskammer (40) mittels der wahlweise druckanlegenden Vorrichtung (44) einem überatmosphärischen Druck ausgesetzt ist, zum Ausstoßen einer vorbestimmten Menge des Fluids aus dem Ausgabemundstück (28) und zum veranlassen der Ausbildung der stromabschließenden Luftblase (52) in dem Mundstück (28).

7. Verfahren zur Abgabe genau abgemessener Mengen eines Fluids, welches Verfahren enthält: Pumpen von Mengen eines Fluids von einer Fluidversorgung (16) über eine Leitung (12) zu einem Ausgabemundstück (28); Bewirken des Pumpens durch wahlweises Anlegen eines Vakuums oder eines überatmosphärischen Drucks an eine Fluidpumpe (22) und Steuern des Fluidstroms durch betriebsmäßiges Durchverbinden eines ersten (18) und zweiten Absperrorgans (26) und der wahlweisen Druckanlegung zwecks Ansaugung vorbestimmter Mengen des Fluids von der Fluidversorgung zu einer Pumpenanordnung und danach zwecks Zuleitung der Fluidmengen von der Pumpenanordnung zu dem Mundstück (28) und Veranlassung der Ausbildung einer fluidstromabschließenden Luftblase (52) in dem Mundstück (28) bei Beendigung der Ausgabe von Fluid aus dem Mundstück (28), um die Augabe von restlichen Tröpfchen des Fluids zu unterbinden.

8. Verfahren nach Anspruch 7, bei dem die Fluidpumpenanordnung eine Membranpumpe (22) mit einer flexiblen Membran (36) enthält, die die Pumpe in eine Fluidabgabekammer (38), welche mit der Leitung zwischen dem ersten und zweiten Absperrorgan (18, 26) in Verbindung steht, und in eine Arbeitskammer (40) unterteilt, welche Membranpumpe (22), ansprechend auf die Anlegung des wahlweisen Drucks, das Fluid von der Fluidversorgung ansaugt und dem Mundstück (28) eine Menge des Fluids zuleitet, die mit dem vereinigten Volumen der Abgabe- und Arbeitskammer (38, 40) in Einklang steht, wobei der wahlweise Druck vorzugsweise an die Arbeitskammer (40) über ein Dreiwegventil (44) angelegt wird, das wahlweise mit einer Vakuumquelle oder mit einer Quelle eines Druckmittels verbunden werden kann, das vorzugsweise Druckluft oder ein Hydraulikfluid enthält.

9. Verfahren nach Anspruch 8, bei dem das erste Absperrorgan (18) in einem Fluidstrom-Durchlaßzustand und das zweite Absperrorgan (26) in einem Fluidstrom-Sperrzustand gehalten wird, wenn die Arbeitskammer (40) mittels des Dreiwegventils (44) einem Vakuum ausgesetzt ist, zum Ansaugen der Fluidmenge von der Fluidversorgung (16) in die Membranpumpe (22).

10. Verfahren nach Anspruch 8 oder 9, bei dem das erste Absperrorgan (19) in einem Fluidstrom-Sperrzustand und das zweite Absperrorgan (26) in einem Fluidstrom-Durchlaßzustand gehalten wird, wenn die Arbeitskammer (40) mittels des Dreiwegventils (44) dem überatomsphärischen Druck ausgesetzt ist, zum Ausstoßen einer vorbestimmten Fluidmenge aus dem Mundstück und zum Veranlassen der Ausbildung der stromabschließenden Luftblase in dem Mundstück (28).

**Revendications**

1. Système de délivrance de fluide (10) en vue de délivrer des quantités dosées avec précision d'un fluide, comportant des moyens d'alimentation en fluide (16); des moyens formant pompe (22); un conduit (14) reliant entre eux lesdits moyens d'alimentation en fluide (16) et lesdits moyens formant pompe (22); une première soupape (18) dans ledit conduit disposée entre lesdites moyens d'alimentation en fluide (16) et les moyens formant pompe (22); une buse (28) en vue de déverser ledit fluide dudit système; un autre conduit (24) reliant ladite buse (28) auxdits moyens formant pompe (22) et audit conduit (14); une seconde soupape (26) dans ledit autre conduit (24); des moyens (44) en vue d'appliquer sélectivement un vide et une pression superatomosphérique auxdits moyens formant pompe (22); et des moyens de commande (50) reliant fonctionnellement entre elles lesdites première et seconde soupapes (18, 26) et lesdits moyens d'application sélective de pression (44) en vue d'aspirer des quantités prédéterminées de fluide depuis lesdits moyens d'alimentation en fluide (16) à travers ledit conduit (14) vers lesdits moyens formant pompe (22) et ensuite d'acheminer lesdites quantités de fluide desdits moyens formant pompe (22) à ladite buse (28), le système étant agencé de manière à provoquer la formation d'une bulle d'air (52) bloquant la circulation du fluide dans ladite buse (28) après achèvement du déversement de fluide de ladite buse (28) de manière à empêcher un déversement de gouttelettes résiduelles dudit fluide de ladite buse (28).

2. Système selon la revendication 1, dans lequel lesdits moyens formant pompe (22) comportent une pompe à diaphragme (22) possédant un diaphragme souple (36) séparant l'intérieur de ladite pompe (22) en une chambre de délivrance de fluide (38) communiquant avec ledit autre conduit (24) entre lesdites première et seconde soupapes (18, 26) et en une chambre de travail (40) communiquant avec lesdits moyens d'application sélective de pression (44).

3. Système selon la revendication 2, dans lequel ladite pompe à diaphragme (22) aspire ledit fluide depuis lesdits moyens d'alimentation en fluide (16) et achemine une quantité dudit fluide vers ladite buse (28) en rapport avec le volume combiné desdites chambres délivrance et de travail (38, 40).

4. Système selon la revendication 1, 2 ou 3, dans lequel lesdites première et seconde soupapes (18, 26) sont constituées chacune d'une soupape de retenue, ou lesdites première et seconde soupapes (18, 26) sont constituées d'une unique soupape à trois voies (44) au point de jonction desdits conduits.

5. Système selon la revendication 2 ou 3, dans lequel lesdits moyens d'application sélective de pression (44) comportent une soupape à trois voies (44) en vue de relier sélectivement la chambre de travail (40) de ladite pompe à diaphragme (22) à une source de vide ou à une source d'un fluide pressurisé, le fluide pressurisé étant de préférence de l'air ou un fluide hydraulique.

6. Système selon la revendication 2, 3 ou 5, dans lequel lesdits moyens de commande maintiennent ladite première soupape (18) dans un état ouvert d'écoulement de fluide et ladite seconde soupape (26) dans un état de blocage d'écoulement lorsque ladite chambre de travail (40) est soumise à un vide par lesdits moyens d'application sélective de pression (44) en vue d'aspirer ladite quantité de fluide depuis lesdits moyens d'alimentation en fluide dans ladite pompe à diaphragme (22), et lesdits moyens de commande (50) maintiennent ladite première soupape (18) dans un état de blocage d'écoulement et ladite seconde soupape (26) dans un état ouvert d'écoulement de fluide lorsque ladite chambre de travail (40) est soumise à une pression superatmosphérique par lesdits moyens d'application sélective de pression (44) pour éjecter une quantité prédéterminée de fluide de ladite buse de déversement (28) et pour provoquer la formation de ladite bulle d'air (52) de blocage d'écoulement dans ladite buse (28).

7. Procédé de délivrance de quantités dosées avec précision d'un fluide, comportant le pompage de quantités d'un fluide depuis une réserve de fluide (16) à travers un conduit (12) vers une buse de déversement (28); la réalisation dudit pompage en appliquant sélectivement un vide ou une pression superatmosphérique à une pompe à fluide (22) et la commande de l'écoulement dudit fluide en reliant fonctionnellement une première (18) et une seconde (26) soupapes et ladite application sélective de pression en vue d'aspirer des quantités prédéterminées de fluide depuis ladite réserve de fluide vers un dispositif de pompage, et ensuite l'acheminement desdites quantités de fluide depuis ledit dispositif de pompage vers ladite buse (28) et la formation d'une bulle d'air (52) bloquant l'écoulement de fluide dans ladite buse (28) après achèvement du déversement du fluide de ladite buse (28) pour empêcher un déversement de gouttelettes résiduelles dudit fluide.

8. Procédé selon la revendication 7, dans lequel ledit dispositif de pompage de fluide comporte une pompe à diaphragme (22) possédant un diaphragme souple (36), ledit diaphragme séparant ladite pompe en une chambre de délivrance de fluide (38) communiquant avec ledit conduit entre lesdites première et seconde soupapes (18, 26) et en une chambre de travail (40) sensible à l'application de ladite pression sélective, ladite pompe à diaphragme (22) aspirant ledit fluide depuis ladite réserve de fluide et acheminant une quantité dudit fluide vers ladite buse (28) en rapport avec le volume combiné desdites chambres de délivrance et de travail (38, 40), ladite pression sélective étant de préférence appliquée à ladite chambre de travail (40) par l'intermédiaire d'une soupape à trois voies (44) reliée sélectivement à une source de vide ou à une source d'un fluide pressurisé, le fluide pressurisé étant de préférence de l'air comprimé ou un fluide hyraulique.

9. Procédé selon la revendication 8, comportant le maintien de ladite première soupape (18) dans un état ouvert d'écoulement de fluide et ladite seconde soupape (26) dans un état de blocage d'écoulement de fluide lorsque ladite chambre de travail (40) est soumise à un vide par ladite soupape à trois voies (44) en vue d'aspirer ladite quantité de fluide de ladite réserve de fluide (16) dans ladite pompe à diaphragme (22).

10. Procédé selon la revendication 8 ou 9, comportant le maintien de ladite première soupape (18) dans un état de blocage d'écoulement de fluide et ladite seconde soupape (26) dans un état ouvert d'écoulement de fluide lorsque ladite chambre de travail (40) est soumise à une pression superatmospherique par ladite soupape à trois voies (44) pour éjecter une quantité prédéterminée de fluide de ladite buse et pour provoquer la formation de ladite bulle d'air de blocage d'écoulement dans ladite buse (28).